(19) Europäisches Patentamt
European Patent Office
Office européen des brevets

(11) EP 1 445 292 B1

(12) # EUROPÄISCHE PATENTSCHRIFT

(45) Veröffentlichungstag und Bekanntmachung des Hinweises auf die Patenterteilung:
**22.11.2006 Patentblatt 2006/47**

(51) Int Cl.:
***C08L 33/02*** (2006.01) ***C09D 133/02*** (2006.01)
***A47L 13/16*** (2006.01) ***B24D 3/28*** (2006.01)

(21) Anmeldenummer: **04000290.9**

(22) Anmeldetag: **09.01.2004**

(54) **Verwendung von wässrigen Bindemitteln bei der Herstellung von Schleifmateralien**

Use of aqueous binders for the production of abrading material

Utilisation de liants aqueux pour la production de materiel abrasif

(84) Benannte Vertragsstaaten:
**AT BE BG CH CY CZ DE DK EE ES FI FR GB GR HU IE IT LI LU MC NL PT RO SE SI SK TR**

(30) Priorität: **06.02.2003 DE 10304958**

(43) Veröffentlichungstag der Anmeldung:
**11.08.2004 Patentblatt 2004/33**

(73) Patentinhaber: **BASF Aktiengesellschaft**
**67056 Ludwigshafen (DE)**

(72) Erfinder:
- **Laubender, Matthias, Dr.**
  **67105 Schifferstadt (DE)**
- **Gerst, Matthias, Dr.**
  **67433 Neustadt (DE)**
- **Reck, Bernd, Dr.**
  **67269 Grünstadt (DE)**
- **Weber, Manfred**
  **68199 Mannheim (DE)**

(56) Entgegenhaltungen:
**EP-A- 0 141 863** **EP-A- 0 261 098**
**EP-A- 0 552 698** **US-A- 4 457 766**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 445 292 B1

## Beschreibung

Die vorliegende Erfindung betrifft die Verwendung einer wäßrigen Polymerdispersion, enthaltend dispergierte Polymerteilchen mindestens eines Polymerisats A1, welches eine Glasübergangstemperatur Tg von -20˚C bis +35˚C aufweist und das erhältlich ist durch radikalische Emulsionspolymerisation in Gegenwart eines Polymerisats A2, das aufgebaut ist aus

- 50 bis 99,5 Gew.-% mindestens einer ethylenisch ungesättigten Mono- und/oder Dicarbonsäure,
- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers

als Bindemittel bei der Herstellung von Schleifmaterialien.

Die Verfestigung von flächenförmigen Gebilden, beispielsweise Faservliesen, Quellvliesen oder Papieren, oder von Formkörpern, wie Faserplatten oder Spanplatten, erfolgt häufig auf chemischem Weg unter Verwendung eines polymeren Bindemittels. Die polymeren Bindemittel können u.a. in Form einer wäßrigen Lösung oder einer wäßrigen Dispersion verwendet werden.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583 086 sind beispielsweise wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden b-Hydroxyalkyl-amide genannt.

In der EP-A 882 074 werden Bindemittel für Formkörper beschrieben, welche aus einem durch radikalische Polymerisation erhaltenen Polymerisat aus einem ungesättigten Säureanhydrid oder einer ungesättigten Dicarbonsäure und einem Alkanolamin bestehen. Derartige Bindemittel werden u.a. auf Faservliesen aufgebracht und dann als Dachbahnen verwendet. Aus der EP-A 882 074 ist aber nicht bekannt, die darin beschriebenen Bindemittel bei der Herstellung von Schleifmaterialien einzusetzen.

Bei der Herstellung von Schleifmaterialien, insbesondere von Schleifpapieren oder Schleifgeweben werden derzeit vor allem Bindemittel auf Basis von Hautleim, Knochenleim oder Formaldehydharzen verwendet. Da derartige Bindemittel in der Regel zu harten und spröden Schleifmaterialien führen, besteht zunehmend die Nachfrage nach Bindemitteln für Schleifmaterialien mit flexiblen, zähelastischen Eigenschaften, welche dennoch eine gute Einbindung des Schleifkorns gewährleisten.

Gegenstand der DE-A 19949592 sind wässrige Polymerdispersionen, enthaltend Polymerteilchen aus mindestens einem Polymerisat, das erhältlich ist durch radikalische Emulsionspolymerisation in Gegenwart eines weiteren Polymerisats, welches u.a. aus ethylenisch ungesättigten Mono- und/oder Dicarbonsäuren besteht. Für die durch radikalische Emulsionspolymerisation erhaltenen Polymerisate werden Glasübergangstemperaturen Tg im Bereich von -60˚C bis +150˚C angegeben. Die in dieser Offenlegungsschrift beschriebenen wässrigen Polymerdispersionen können u.a. auch zur Herstellung von Schleifpapier und Schleifkörpern eingesetzt werden. Die so erhaltenen Schleifmaterialien sind aber noch hinsichtlich ihrer Flexibilität, Zähelastizität, ihres Abriebverhaltens, ihrer Reißkraft sowie ihres Kornbindevermögens verbesserungsfähig.

Der vorliegenden Erfindung lag daher die Aufgabe zu Grunde, den geschilderten Nachteilen abzuhelfen und ein verbessertes Bindemittel für Schleifmaterialien bereit zu stellen, welche sich u.a. durch eine hohe Flexibilität, Zähelastizität und Reißkraft auszeichnen, ein günstiges Abriebverhalten zeigen und in denen das Schleifgranulat, beispielsweise Korund oder Quarz, dennoch fest eingebunden ist.

Demgemäß wurde die Verwendung einer wäßrigen Polymerdispersion enthaltend dispergierte Polymerteilchen mindestens eines Polymerisats A1, welches eine Glasübergangstemperatur Tg von -20˚C bis +35˚C aufweist und das erhältlich ist durch radikalische Emulsionspolymerisation in Gegenwart eines Polymerisats A2, das aufgebaut ist aus

- 50 bis 99,5 Gew.-% mindestens einer ethylenisch ungesättigten Mono- und/oder Dicarbonsäure, deren Carbonsäuregruppen eine Anhydridgruppe bilden können oder Gemischen davon,

- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,

- bis zu 20 Gew.-% mindestens eines weiteren Monomers

als Bindemittel für die Herstellung von Schleifmaterialien gefunden.

Im Zusammenhang mit den Monomerkomponenten des Polymerisats A1 steht Alkyl im Folgenden vorzugsweise für geradkettige oder verzweigte $C_1$-$C_{22}$-Alkylreste, insbesondere $C_1$-$C_{12}$- und besonders bevorzugt $C_1$-$C_6$-Alkylreste, wie Methyl, Ethyl, n-Propyl, n-Butyl, sek.-Butyl, tert.-Butyl, n-Pentyl, n-Hexyl, 2-Ethylhexyl, n-Dodecyl oder n-Stearyl. Hydroxyalkyl steht vorzugsweise für Hydroxy-$C_1$-$C_6$-alkyl, wobei die Alkylreste geradkettig oder verzweigt sein können, und insbesondere für 2-Hydroxyethyl, 2- oder 3-Hydroxypropyl, 2-Methyl-2-hydroxypropyl und 4-Hydroxybutyl. Cycloalkyl steht vorzugsweise für $C_5$-$C_7$-Cyclohexyl, insbesondere Cyclopentyl und Cyclohexyl, Aryl steht vorzugsweise für Phenyl oder Naphthyl.

Das Polymerisat A1 stellt ein radikalisches Emulsionspolymerisat dar. Zu dessen Herstellung können alle durch radikalische Polymerisation polymerisierbaren Monomere eingesetzt werden. Im Allgemeinen ist das Polymerisat aufgebaut aus

- 80 bis 100 Gew.-%, bevorzugt 85 bis 99,9 Gew.-%, bezogen auf das Gesamtgewicht der Monomere für das Polymerisat, wenigstens eines ethylenisch ungesättigten Hauptmonomeren sowie

- 0 bis 20 Gew.-%, bevorzugt 0,1 bis 15 Gew.-%, bezogen auf das Gesamtgewicht der Monomere für das Polymerisat, wenigstens eines ethylenisch ungesättigten Comonomeren.

Das Hauptmonomer ist vorzugsweise ausgewählt unter

- Estern aus vorzugsweise 3 bis 6 C-Atomen aufweisenden $\alpha,\beta$-monoethylenisch ungesättigten Mono- oder Dicarbonsäuren, wie Acrylsäure, Methacrylsäure, Maleinsäure, Fumarsäure und Itaconsäure mit $C_1$-$C_{12}$-, vorzugsweise $C_1$-$C_8$-Alkanolen. Derartige Ester sind insbesondere Methyl-, Ethyl-, n-Butyl-, Isobutyl-, tert-Butyl-, n-Pentyl-, iso-Pentyl- und 2-Ethylhexylacrylat und/oder -methacrylat und Mischungen davon.

- vinylaromatischen Verbindungen, bevorzugt Styrol, a-Methylstyrol, o-Chlorstyrol, Vinyltoluolen und Mischungen davon;

- Vinylestern von $C_1$-$C_{18}$-Mono- oder Dicarbonsäuren, wie Vinyl-acetat, Vinylpropionat, Vinyl-n-butyrat, Vinyllaurat und/oder Vinylstearat;

- Butadien;

- linearen 1-Olefinen, verzweigtkettigen 1-Olefinen oder cyclischen Olefinen, wie z. B. Ethen, Propen, Buten, Isobuten, Penten, Cyclopenten, Hexen oder Cyclohexen. Des Weiteren sind auch Metallocen-katalysiert hergestellte Oligoolefine mit endständiger Doppelbindung, wie z. B. Oligopropen oder Oligohexen geeignet;

- Acrylnitril, Methacrylnitril;

- Vinyl- und Allylalkylethern mit 1 bis 40 Kohlenstoffatomen im Alkylrest, wobei der Alkylrest noch weitere Substituenten, wie eine oder mehrere Hydroxylgruppen, eine oder mehrere Amino- oder Diaminogruppen oder eine bzw. mehrere Alkoxylatgruppen tragen kann, wie z. B. Methylvinylether, Ethylvinyl-ether, Propylvinylether und 2-Ethylhexylvinylether, Isobutylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butylamino)ethylvinylether, Methyldiglykolvinylether sowie die entsprechenden Allylether bzw. deren Mischungen.

Besonders bevorzugte Hauptmonomere sind Styrol, Methylmethacrylat, n-Butylacrylat, Ethylacrylat, 2-Ethylhexylacrylat, Vinylacetat, Ethen und Butadien.

Das Comonomer ist vorzugsweise ausgewählt unter

- ethylenisch ungesättigten Mono- oder Dicarbonsäuren oder deren Anhydriden, vorzugsweise Acrylsäure, Methacrylsäure, Methacrylsäureanhydrid, Maleinsäure, Maleinsäureanhydrid, Fumarsäure und/oder Itaconsäure;

- Acrylamiden und alkylsubstituierten Acrylamiden, wie z. B. Acrylamid, Methacrylamid, N,N-Dimethylacrylamid, N-Methylolmethacrylamid, N-tert.-Butylacrylamid, N-Methylmethacrylamid und Mischungen davon;

- sulfogruppenhaltigen Monomeren, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalzen bzw. deren Mischungen sowie Sulfopropylacrylat und/oder Sulfopropylmethacrylat;

- $C_1$-$C_4$-Hydroxyalkylestern von $C_3$-$C_6$-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Estern von mit 2 bis 50 Mol Ethylenoxid, Propylenoxid, Butylenoxid oder Mischungen davon alkoxylierten $C_1$-$C_{18}$-Alkoholen mit den erwähnten Säuren, wie z. B. Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3,5,7,10 oder 30 Mol Ethylenoxid umgesetztem $C_{13}$/$C_{15}$-Oxoalkohol bzw. deren Mischungen;

- Vinylphosphonsäuren und deren Salzen, Vinylphosphonsäuredimethylester und anderen phosphorhaltigen Monomeren;

- Alkylaminoalkyl(meth)acrylaten oder Alkylaminoalkyl(meth)acrylamiden oder deren Quarternisierungsprodukten, wie z. B. 2-(N,N-Dimethylamino)-ethyl(meth)acrylat oder 2-(N,N,N-Trimethylammonium)-ethylmethacrylat-chlorid, 3-(N,N-Dimethyl-amino)-propyl(meth)acrylat, 2-Dimethylamino-ethyl(meth)acrylamid, 3-Dimethylaminopropyl(meth)acrylamid, 3-Trimethylammoniumpropyl(meth)acrylamidchlorid und Mischungen davon;

- Allylestern von $C_1$-$C_{30}$-Monocarbonsäuren;

- N-Vinylverbindungen, wie N-Vinylformamid, N-Vinyl-N-methylformamid, N-Vinylpyrrolidon, N-Vinylimidazol, 1-Vinyl-2-methyl-imidazol, 1-Vinyl-2-methylimidazolin, 2-Vinylpyridin, 4-Vinylpyridin, N-Vinylcarbazol und/oder N-Vinylcaprolactam;

- Diallyldimethylammoniumchlorid, Vinylidenchlorid, Vinylchlorid, Acrolein, Methacrolein;

- 1,3-Diketogruppen enthaltenden Monomeren, wie z. B. Acetoacetoxyethyl(meth)acrylat oder Diacetonacrylamid, harnstoffgruppenhaltigen Monomeren, wie Ureidoethyl(meth)acrylat, Acryl-amidoglykolsäure, Methacrylamidoglykolatmethylether;

- Silylgruppen enthaltenden Monomeren, wie z. B. Trimethoxysilylpropylmethacrylat;

- Glycidylgruppen enthaltenden Monomeren, wie z. B. Glycidylmethacrylat.

Besonders bevorzugte Comonomere sind n-Butylacrylat, n-Butylmethacrylat, Hydroxyethylacrylat, Hydroxypropylacrylat, Hydroxybutylacrylat, Hydroxyethylmethacrylat und Mischungen davon. Ganz besonders bevorzugt sind n-Butylacrylat und Hydroxyethylacrylat, insbesondere in Mengen von 2 bis 50 Gew.-%, bezogen auf das Gesamtmonomere A1.

Als Polymerisat A1 wird besonders bevorzugt ein Copolymerisat aus Styrol, n-Butylacrylat und gegebenenfalls noch Hydroxyethylacrylat eingesetzt.

Das Polymerisat A2 enthält 50 bis 99,5 Gew.-%, bevorzugt 70 bis 99 Gew.-%, solcher Strukturelemente eingebaut, die sich von mindestens einer ethylenisch ungesättigten Mono- oder Dicarbonsäure ableiten. Diese Säuren können in dem Polymerisat gewünschtenfalls auch teilweise oder vollständig in Form eines Salzes vorliegen. Bevorzugt ist die saure Form.

Vorzugsweise ist das Polymerisat A2 zu mehr als 10 g/l (bei 25˚C) in Wasser löslich.

Brauchbare ethylenisch ungesättigte Carbonsäuren wurden bereits vorstehend im Zusammenhang mit dem Polymerisat A1 genannt. Bevorzugte Carbonsäuren sind $C_3$- bis $C_{10}$-Monocarbonsäuren und $C_4$- bis $C_8$-Dicarbonsäuren, insbesondere Acrylsäure, Methacrylsäure, Crotonsäure, Fumarsäure, Maleinsäure, 2-Methylmaleinsäure und/oder Itaconsäure. Besonders bevorzugt sind Acrylsäure, Methacrylsäure, Maleinsäure und Mischungen davon. Bei der Herstellung des Polymerisats A2 können selbstverständlich auch anstelle der Säuren oder zusammen mit den Säuren deren Anhydride, wie Maleinsäureanhydrid, Acrylsäure- oder Methacrylsäureanhydrid eingesetzt werden.

Das Polymerisat A2 enthält ferner 0,5 bis 50 Gew.-%, bevorzugt 1 bis 30 Gew.-%, wenigstens einer ethylenisch ungesättigten Verbindung, die ausgewählt ist unter den Estern ethylenisch ungesättigter Monocarbonsäuren und den

Halbestern und Diestern ethylenisch ungesättigter Dicarbonsäuren mit mindestens einem hydroxylgruppenhaltigen Amin, in einpolymerisierter Form.

Das Polymer A2 liegt vorzugsweise als Kammpolymer mit kovalent gebundenen Aminseitenketten vor.

Als Komponente der Ester geeignete Monocarbonsäuren sind die zuvor genannten $C_3$- bis $C_{10}$-Monocarbonsäuren, insbesondere Acrylsäure, Methacrylsäure, Crotonsäure, und Mischungen davon.

Als Komponente der Halbester und Diester geeignete Dicarbonsäuren sind die zuvor genannten $C_4$- bis $C_8$-Dicarbonsäuren, insbesondere Fumarsäure, Maleinsäure, 2-Methylmaleinsäure, Itaconsäure, und Mischungen davon.

Vorzugsweise ist das Amin mit mindestens einer Hydroxylgruppe ausgewählt unter sekundären und tertiären Aminen, die wenigstens einen $C_6$- bis $C_{22}$-Alkyl-, $C_6$- bis $C_{22}$-Alkenyl-, Aryl-$C_6$- bis $C_{22}$-alkyl- oder Aryl-$C_6$- bis $C_{22}$-alkenylrest aufweisen, wobei die Alkenylgruppe 1, 2 oder 3 nicht benachbarte Doppelbindungen aufweisen kann.

Vorzugsweise ist das Amin hydroxyalkyliert und/oder alkoxyliert. Alkoxylierte Amine weisen vorzugsweise einen oder zwei Alkylen-oxidreste mit terminalen Hydroxylgruppen auf. Vorzugsweise weisen die Alkylenoxidreste je 1 bis 100, bevorzugt je 1 bis 50, gleiche oder verschiedene Alkylenoxideinheiten, statistisch verteilt oder in Form von Blöcken auf. Bevorzugte Alkylenoxide sind Ethylenoxid, Propylenoxid und/oder Butylenoxid. Besonders bevorzugt ist Ethylenoxid.

Bevorzugt enthält das Polymerisat A2 eine ungesättigte Verbindung auf Basis einer Aminkomponente eingebaut, die wenigstens ein Amin der allgemeinen Formel (I)

$$R^cNR^aR^b \quad (I)$$

enthält, wobei

$R^c$ für $C_6$- bis $C_{22}$-Alkyl, $C_6$- bis $C_{22}$-Alkenyl, Aryl-$C_6$-$C_{22}$-alkyl oder Aryl-$C_6$-$C_{22}$-alkenyl steht, wobei der Alkenylrest 1,2 oder 3 nicht benachbarte Doppelbindungen aufweisen kann,

$R^a$ für Hydroxy-$C_1$-$C_6$-alkyl oder einen Rest der Formel II

$$-(CH_2CH_2O)_x(CH_2CH(CH_3)O)_y-H \quad (II)$$

steht, wobei
in der Formel II die Reihenfolge der Alkylenoxideinheiten beliebig ist und x und y unabhängig voneinander für eine ganze Zahl von 0 bis 100, bevorzugt 0 bis 50, stehen, wobei die Summe aus x und y > 1 ist,

$R^b$ für Wasserstoff, $C_1$- bis $C_{22}$-Alkyl, Hydroxy-$C_1$-$C_6$-alkyl, $C_6$- bis $C_{22}$-Alkenyl, Aryl-$C_6$-$C_{22}$-alkyl, Aryl-$C_6$-$C_{22}$-alkenyl oder $C_5$- bis $C_8$-Cycloalkyl steht, wobei der Alkenylrest 1, 2 oder 3 nicht benachbarte Doppelbindungen aufweisen kann,
oder Rb für einen Rest der Formel III

$$-(CH_2CH_2O)_v(CH_2CH(CH_3)O)_w-H \quad (III)$$

steht, wobei
in der Formel III die Reihenfolge der Alkylenoxideinheiten beliebig ist und v und w unabhängig voneinander für eine ganze Zahl von 0 bis 100, vorzugsweise 0 bis 50, stehen.

Bevorzugt steht $R^c$ für $C_8$- bis $C_{20}$-Alkyl oder $C_8$- bis $C_{20}$-Alkenyl, wobei der Alkenylrest 1, 2 oder 3 nicht benachbarte Doppelbindungen aufweisen kann. Vorzugsweise steht $R^c$ für den Kohlenwasserstoffrest einer gesättigten oder ein- oder mehrfach ungesättigten Fettsäure. Bevorzugte Reste $R^c$ sind z. B. n-Octyl, Ethylhexyl, Undecyl, Lauryl, Tridecyl, Myristyl, Pentadecyl, Palmityl, Margarinyl, Stearyl, Palmitoleinyl, Oleyl und Linolyl.

Besonders bevorzugt handelt es sich bei der Aminkomponente um ein alkoxyliertes Fettamin oder ein alkoxyliertes Fettamingemisch. Besonders bevorzugt sind die Ethoxylate. Insbesondere werden Alkoxylate von Aminen auf Basis natürlich vorkommender Fettsäuren eingesetzt, wie z. B. Talgfettamine, die überwiegend gesättigte und ungesättigte $C_{14}$-, $C_{16}$- und $C_{18}$-Alkylamine enthalten oder Kokosamine, die gesättigte, einfach und zweifach ungesättigte $C_6$-$C_{22}$-, vorzugsweise $C_{12}$-$C_{14}$-Alkylamine enthalten. Zur Alkoxylierung geeignete Amingemische sind z. B. verschiedene Armeen®-Marken der Fa. Akzo oder Noram®-Marken der Fa. Ceca.

Geeignete, kommerziell erhältliche alkoxylierte Amine sind z. B. die Noramox®-Marken der Fa. Ceca, bevorzugt ethoxylierte Oleylamine, wie Noramox® 05 (5 EO-Einheiten), sowie die unter der Marke Lutensol® FA vertriebenen Produkte der Fa. BASF AG.

Die Einpolymerisierung der vorgenannten Ester, Halbester und Diester bewirkt im Allgemeinen eine ausgeprägte Stabilisierung der erfindungsgemäß zu verwendenden Polymerdispersionen. Diese behalten ihre kolloidale Stabilität der Latexpartikel bei Verdünnung mit Wasser oder verdünnten Elektrolyten oder Tensidlösungen zuverlässig bei.

Die Veresterung zur Herstellung der zuvor beschriebenen Ester, Halbester und Diester erfolgt nach üblichen, dem Fachmann bekannten Verfahren. Zur Herstellung von Estern ungesättigter Monocarbonsäuren können die freien Säuren oder geeignete Derivate, wie Anhydride, Halogenide, z. B. Chloride, und ($C_1$- bis $C_4$)-Alkylester eingesetzt werden. Die Herstellung von Halbestern ungesättigter Dicarbonsäuren erfolgt bevorzugt ausgehend von den entsprechenden Dicarbonsäureanhydriden. Vorzugsweise erfolgt die Umsetzung in Gegenwart eines Katalysators, wie z. B. eines Dialkyltitanats oder einer Säure, wie Schwefelsäure, Toluolsulfonsäure oder Methansulfonsäure. Die Umsetzung erfolgt im Allgemeinen bei Reaktionstemperaturen von 60 bis 200°C. Nach einer geeigneten Ausführungsform erfolgt die Umsetzung in Gegenwart eines Inertgases, wie Stickstoff. Bei der Reaktion gebildetes Wasser kann durch geeignete Maßnahmen, wie Abdestillieren, aus dem Reaktionsgemisch entfernt werden. Die Umsetzung kann gewünschtenfalls in Gegenwart üblicher Polymerisationsinhibitoren erfolgen. Die Veresterungsreaktion kann im Wesentlichen vollständig oder nur bis zu einem Teilumsatz durchgeführt werden. Gewünschtenfalls kann eine der Esterkomponenten, vorzugsweise das hydroxylgruppenhaltige Amin, im Überschuss eingesetzt werden. Der Anteil der Esterbildung kann mittels Infrarotspektroskopie ermittelt werden.

Nach einer bevorzugten Ausführungsform erfolgt die Herstellung der ungesättigten Ester, Halbester oder Diester und deren weitere Umsetzung zu den erfindungsgemäß eingesetzten Polymerisaten A2 ohne Zwischenisolierung der Ester und vorzugsweise nacheinander im selben Reaktionsgefäß.

Bevorzugt wird zur Herstellung der Polymerisate A2 ein Umsetzungsprodukt aus einem Dicarbonsäureanhydrid, vorzugsweise Maleinsäureanhydrid, und einem der zuvor beschriebenen hydroxylgruppenhaltigen Amine eingesetzt.

Neben den Bestandteilen Carbonsäure sowie Ester, Halbester und/oder Diester kann das Polymerisat A2 noch 0 bis 20 Gew.-%, bevorzugt 0,1 bis 10 Gew.-%, andere Monomere einpolymerisiert enthalten. Brauchbare Monomere sind die im Zusammenhang mit dem Polymerisat A1 genannten Monomere, wobei Vinylaromaten, wie Styrol, Olefine, beispielsweise Ethylen, oder (Meth)acrylsäureester wie Methyl(meth)acrylat, Ethyl(meth)acrylat, n-Butyl(meth)acrylat, 2-Ethylhexyl(meth)acrylat und Mischungen davon besonders bevorzugt sind.

Die Herstellung der Polymerisate A2 erfolgt vorzugsweise durch radikalische Polymerisation in Substanz oder in Lösung. Geeignete Lösungsmittel für die Lösungsmittelpolymerisation sind z. B. Wasser, mit Wasser mischbare organische Lösungsmittel, wie Alkohole und Ketone, beispielsweise Methanol, Ethanol, n-Propanol, Isopropanol, n-Butanol, Aceton, Methylethylketon etc., und Mischungen davon. Geeignete Polymerisationsinitiatoren sind beispielsweise Peroxide, Hydroperoxide, Peroxodisulfate, Percarbonate, Peroxoester, Wasserstoffperoxid und Azoverbindungen, wie sie im Folgenden für die Herstellung der Polymerdispersionen näher beschrieben werden. Die Polymerisate A2 können gewünschtenfalls separat hergestellt und nach üblichem Verfahren isoliert und/oder gereinigt werden. Bevorzugt werden die Polymerisate A2 unmittelbar vor der Herstellung der erfindungsgemäß zu verwendenden Polymerdispersionen hergestellt und ohne Zwischenisolierung für die Dispersionspolymerisation eingesetzt.

Die Herstellung der Polymerisate A2 kann vorteilhaft auch durch polymeranaloge Umsetzung erfolgen. Dazu kann ein Polymerisat, das 80 bis 100 Gew.-% mindestens einer ethylenisch ungesättigten Mono- und/oder Dicarbonsäure sowie 0 bis 20 Gew.-% der zuvor genannten anderen Polymere eingebaut enthält, mit mindestens einem hydroxylgruppenhaltigen Amin umgesetzt werden.

Geeignete ethylenisch ungesättigte Mono- und Dicarbonsäuren sind die zuvor als Komponente der Polymerisate A1 und A2 genannten. Geeignete Amine, die wenigstens eine Hydroxylgruppe aufweisen, sind ebenfalls die zuvor genannten. Die Säuren können in dem zur polymeranalogen Umsetzung eingesetzten Polymerisat gewünschtenfalls teilweise oder vollständig in Form eines Derivates, bevorzugt eines $C_1$- bis $C_6$-Alkylesters, vorliegen.

Die Herstellung der Polymerisate A2 durch polymeranaloge Umsetzung erfolgt vorzugsweise in einem geeigneten nichtwässrigen Lösungsmittel oder in Substanz. Bei der Umsetzung in Substanz kann die Aminkomponente gegebenenfalls im Überschuss eingesetzt werden, um als Lösungsmittel zu dienen. Bevorzugt sind Lösungsmittel, die mit Wasser ein Azeotrop bilden und somit eine einfache Entfernung des bei der Reaktion gebildeten Wassers ermöglichen. Vorzugsweise erfolgt die Umsetzung in Gegenwart eines Veresterungskatalysators, wie zuvor beschrieben. Die Reaktionstemperatur liegt bevorzugt in einem Bereich von 100 bis 200°C. Bei der Reaktion gebildetes Wasser kann durch geeignete Maßnahmen, wie z.B. Abdestillieren, entfernt werden.

Das Gewichtsverhältnis von Polymerisat A1 zu Polymerisat A2, auf Feststoffbasis, liegt vorzugsweise im Bereich von 7:1 bis 1:7, insbesondere 3:1 bis 1:3.

Neben den Polymerisaten A1 und A2 können die erfindungsgemäßen Latices noch 0 bis 50 Gew.-%, bevorzugt 0,1 bis 40 Gew.-%, bezogen auf das Polymerisat A2, mindestens eines oberflächenaktiven, alkoxylierten, bevorzugt ethoxylierten oder propoxylierten, Alkylamins enthalten. Bevorzugte Alkylamine sind die Alkylamine der Formel RcNRaRb, wie zuvor definiert, die auch in dem Polymerisat A2 enthalten sind, wobei Alkylamine der Formel

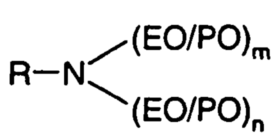

in der R ein Alkyl-, Alkenyl- oder Alkylvinylrest mit mindestens 6 Kohlenstoffatomen darstellt und m und n unabhängig

voneinander > 1 sind, besonders bevorzugt sind. Bevorzugte Reste R weisen 8 bis 22 Kohlenstoffatome auf.

Die in dem Polymerisat A2 enthaltenen alkoxylierten Alkylamine und die zusätzlichen Alkylamin-Vernetzer können gleiche oder verschiedene Verbindungen sein.

Gewünschtenfalls kann die erfindungsgemäß einzusetzende Polymerdispersion noch weitere Vernetzer enthalten, beispielsweise einen Amin- oder Amid-Vernetzer mit mindestens zwei Hydroxylgruppen. Geeignete Vernetzer sind insbesondere die in der DE-A 197 29 161 offenbarten Alkanolamine, die hiermit durch Bezugnahme zum Offenbarungsgehalt der vorliegenden Erfindung gemacht werden.

Als Vernetzer eignen sich weiter vorzugsweise β-Hydroxyalkylamine der Formel

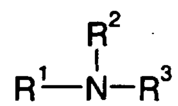

wobei $R^1$ für ein H-Atom, eine $C_1$- bis $C_{10}$-Alkylgruppe, eine $C_1$-bis $C_{10}$-Hydroxyalkylgruppe oder einen Rest der Formel IV

$$-(CH_2CH_2O)_x(CH_2CH(CH_3)O)_y\text{-H} \quad (IV)$$

steht, wobei

in der Formel IV die Reihenfolge der Alkylenoxideinheiten beliebig ist und x und y unabhängig voneinander für eine ganze Zahl von 0 bis 100 stehen, wobei die Summe aus x und y > 1 ist und $R^2$ und $R^3$ unabhängig voneinander für eine $C_1$- bis $C_{10}$-Hydroxyalkylgruppe stehen.

Besonders bevorzugt stehen $R^2$ und $R^3$ unabhängig voneinander für eine $C_2$- bis $C_5$-Hydroxyalkylgruppe und $R^1$ für ein H-Atom, eine $C_1$- bis $C_5$-Alkylgruppe oder eine $C_2$- bis $C_5$-Hydroxyalkylgruppe.

Besonders bevorzugt sind Diethanolamin, Triethanolamin, Diisopropanolamin, Triisopropanolamin, Methyldiethanolamin, Butyldiethanolamin und Methyldiisopropanolamin, insbesondere Triethanolamin.

Weitere bevorzugte β-Hydroxyalkylamine sind die in der DE-A 196 21 573 als Komponente A offenbarten Amine, die hiermit durch Bezugnahme zum Offenbarungsgehalt der vorliegenden Erfindung gemacht werden. Dazu zählen vorzugsweise lineare oder verzweigte aliphatische Verbindungen, die pro Molekül mindestens zwei funktionelle Aminogruppen vom Typ (a) oder (b) aufweisen

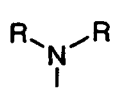

(a)

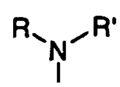

(b)

worin R für Hydroxyalkyl steht und R' für Alkyl steht, ist, bevorzugt eine Verbindung der Formel I

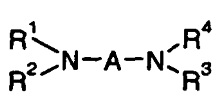

(I)

worin

A für $C_2$-$C_{18}$-Alkylen steht, das gegebenenfalls substituiert ist durch ein oder mehrere Gruppen, die unabhängig voneinander ausgewählt sind unter Alkyl, Hydroxyalkyl, Cycloalkyl, OH und $NR^6R^7$, wobei $R^6$ und $R^7$ unabhängig voneinander für H, Hydroxyalkyl oder Alkyl stehen,
und das gegebenenfalls unterbrochen ist durch ein oder mehrere Sauerstoffatome und/oder $NR^5$-Gruppen, wobei $R^5$ für H, Hydroxyalkyl, $(CH_2)_nNR^6R^7$, wobei n für 2 bis 5 steht und $R^6$ und $R^7$ die oben angegebenen Bedeutungen besitzen, oder Alkyl, das seinerseits durch ein oder mehrere $NR^5$-Gruppen, wobei $R^5$ die oben angegebenen Bedeutungen besitzt, unterbrochen und/oder durch ein oder mehrere $NR^6R^7$-Gruppen substituiert sein kann, wobei $R^6$ und $R^7$ die oben angegebenen Bedeutungen besitzen, steht;

oder A für einen Rest der Formel steht:

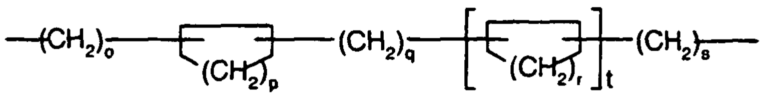

worin

| | |
|---|---|
| o, q und s | unabhängig voneinander für 0 oder eine ganze Zahl von 1 bis 6 stehen, |
| p und r | unabhängig voneinander für 1 oder 2 stehen und |
| t | für 0,1 oder 2 steht, |

wobei die cycloaliphatischen Reste auch durch 1, 2 oder 3 Alkylreste substituiert sein können und $R^1$, $R^2$ und $R^3$ und $R^4$ unabhängig voneinander für H, Hydroxyalkyl, Alkyl oder Cycloalkyl stehen.

Bevorzugte höherfunktionelle β-Hydroxyalkylamine sind insbesondere mindestens zweifach ethoxylierte Amine mit einem Mol-Gewicht von unter 1 000 g/mol, wie z. B. Diethanolamin, Triethanolamin und ethoxyliertes Diethylentriamin, bevorzugt stöchiometrisch ethoxyliertes Diethylentriamin, d. h. Diethylentriamin, worin alle NH-Wasserstoffatome im Mittel einfach ethoxyliert sind.

Gut geeignete zusätzliche Vernetzer sind auch β-Hydroxyalkylamide, bevorzugt die in der US-A-5 143 582 genannten β-Hydroxyalkylamide der Formel

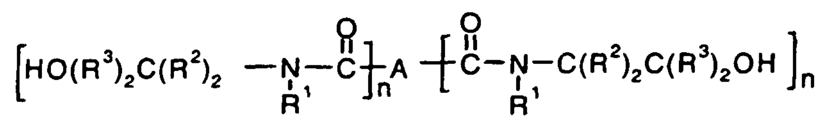

Besonders bevorzugt sind die β-Hydroxyalkylamide der vorstehenden Formel, in der $R^1$ Wasserstoff, eine kurzkettige Alkylgruppe oder $HO(R^3)_2C(R^2)_2C$-, n und n' jeweils 1, -A- eine $-(CH_2)m$-Gruppe, m 0 bis 8, bevorzugt 2 bis 8, $R^2$ jeweils Wasserstoff, und eine der $R^3$-Gruppen jeweils Wasserstoff und die andere Wasserstoff oder $C_1$-$C_5$-Alkyl sind. Besonders bevorzugt ist Bis[N,N-di(2-hydroxyethyl)]adipinsäureamid.

Die Zugabe des Vernetzers bewirkt im Allgemeinen eine bessere Härtung der erfindungsgemäß zu verwendenden Zusammensetzungen bei gegebener Härtungstemperatur bzw. eine Aushärtung bei niedriger Temperatur bei vorgegebener Härtungszeit. Der Gewichtsanteil des Vernetzers relativ zur Summe aus Polymerisat A1 und A2 beträgt 0 bis 50 Gew.-%, vorzugsweise 0,1 bis 30 Gew.-%.

Weiterhin kann in den erfindungsgemäß zu verwendenden Polymerdispersionen ein Reaktionsbeschleuniger zugesetzt werden. Bevorzugt sind dabei phosphorhaltige Verbindungen, insbesondere hypophosphorige Säure sowie deren Alkali- und Erdalkalisalze oder Alkali-Tetrafluoroborate. Auch Salze von Mn(II), Ca(II), Zn(II), Al(III), Sb(III) oder Ti(IV) oder starke Säuren, wie para-Toluolsulfonsäure, Trichloressigsäure und Chlorsulfonsäure, können als Reaktionsbeschleuniger zugesetzt werden. Der Gewichtsanteil des Reaktionsbeschleunigers relativ zur Summe aus Polymerisat A1 und A2 beträgt 0,1 bis 5 Gew.-%, vorzugsweise 0,1 bis 2 Gew.-%.

Besonders bevorzugte Zusammensetzungen der erfindungsgemäß zu verwendenden Polymerdispersionen sind

| | |
|---:|---|
| 70 bis 45 Gew.-% | Polymerisat A1, |
| 25 bis 45 Gew.-% | Polymerisat A2 und gegebenenfalls |
| 0 bis 10 Gew.-% | oberflächenaktives alkoxyliertes Alkylamin, |
| 0 bis 30 Gew.-% | hydroxylgruppenhaltiger Vernetzer, |
| 0 bis 5 Gew.-% | Reaktionsbeschleuniger. |

Besonders bevorzugt ist das Gew.-%-Verhältnis von Polymerisat A1 zu Polymerisat A2 in der Polymerdispersion 50:50.

Die Herstellung der erfindungsgemäß zu verwendenden Polymerdispersion erfolgt vorzugsweise durch wässrige Emulsionspolymerisation, wobei eine batch-, eine semi-kontinuierliche oder eine kontinuierliche Fahrweise möglich ist. Es erwies sich als vorteilhaft, das Polymerisat A2 zusammen mit den Monomeren des Polymerisats A1 in Form eines Emulsionszulaufes in das Reaktionsgefäß zuzudosieren. Gewünschtenfalls können die das Polymerisat A1 bildenden Monomere und das Polymerisat A2 teilweise oder vollständig über zwei oder mehrere getrennte Zuläufe dem Reaktionsgefäß zugeführt werden. Die Monomeren können sowohl in voremulgierter als auch in nichtvoremulgierter Form dem Reaktionsgefäß zugeführt werden. Nach einer bevorzugten Ausführungsform wird wenigstens ein Teil des Polymerisats A2 zusammen mit wenigstens einer Monomerkomponente von A1 dem Reaktionsgefäß zugeführt. Das Polymerisat A2 kann teilweise oder vollständig als Reaktorvorlage verwendet werden. Die Verwendung einer definierten Menge eines Saat-Latex als Reaktorvorlage ist für die erfindungsgemäß einzusetzenden Polymerdispersionen vorteilhaft zur gezielten Einstellung einer Teilchengrößenverteilung. Dabei können 0 bis 25 Gew.-%, bevorzugt 0,1 bis 10 Gew.-%, bezogen auf das Polymerisat A1, eines geeigneten Saat-Latex Verwendung finden.

Die Herstellung der Polymerdispersion erfolgt in der Regel in Wasser als Dispergiermedium. Es können jedoch auch mit Wasser mischbare organische Lösungsmittel, wie Alkohole und Ketone, beispielsweise Methanol, Ethanol, n-Propanol, iso-Propanol, n-Butanol, Aceton oder Methylethylketon, bis zu einem Anteil von etwa 30 Vol.-% enthalten sein.

Das Polymerisat A1 wird also durch wässrige Emulsionspolymerisation in Gegenwart des Polymerisats A2 und, sofern enthalten, bevorzugt in Gegenwart eines oberflächenaktiven Amins, wie zuvor beschrieben, hergestellt.

Die Polymerisation wird vorzugsweise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Ditert.-Butylperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme wie z.B. $H_2O_2$/Ascorbinsäure oder t-Butylhydroperoxid/Natriumhydroxymethansulfinat, können als Polymerisationsinitiatoren verwendet werden.

Die Initiatoren können allein oder in Mischung untereinander angewendet werden, z.B. Mischungen aus Wasserstoffperoxid und Natriumperoxidisulfat. Für die Polymerisation in wässrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im Allgemeinen in Mengen von 0,05 bis 5 Gew.-%, bezogen auf die Monomere, eingesetzt.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9.000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z. B. Tegomere) der Th. Goldschmidt AG). Die Vernetzer werden vorzugsweise in Mengen von 10 ppm bis 5 Gew.-%, bezogen auf die zu polymerisierenden Monomere, eingesetzt.

Als Vernetzungsbeschleuniger können u.a. phosphorhaltige Verbindungen, insbesondere phosphorige und hypophosphorige Säuren und deren Salze verwendet werden.

Zusätzlich zu den genannten Bestandteilen können in den wäßrigen Polymerdispersionen übliche Zusätze je nach Anwendungszweck enthalten sein.

Die in der wäßrigen Polymerdispersion gegebenenfalls zusätzlich enthaltenen Komponenten werden üblicherweise nach dem Ende der Emulsionspolymerisation zugegeben.

Die erfindungsgemäß zu verwendenden wässrigen Polymerdispersionen können zur Modifikation verschiedener Eigenschaftsmerkmale auch mit einer oder mehreren anderen Polymerdispersionen, Polymerfösungen oder Polymerpulvern gemischt werden.

Ferner ist zur Modifikation die Zumischung weiterer Mischungskomponenten möglich, u.a. von organischen Komponenten, wie z.B. Epoxy-funktioneller Komponenten, Formaldehydharze, Komponenten mit Isocyanat- oder Urethangruppen, amino-, carboxy- oder hydroxyfunktionalisierte Mono- oder Disilan- bzw. -siloxanverbindungen, oder anderer substituierter oder nicht substituierter Kohlenwasserstoffverbindungen.

Desweiteren können zu den wässrigen Polymerdispersionen zusätzlich auch anorganische Komponenten zugegeben werden (Füllstoffe, Rheologieadditive, Haftvermittler, Vernetzungsbeschleuniger, etc.). Beispielhaft zu nennen sind Pigmente, Füllstoffe, Salze, Oxide.

Die erfindungsgemäß zu verwendenden Polymerdispersionen können bei Bedarf auch mehrere der zuvor genannten Mischkomponenten gleichzeitig enthalten.

Weiter können die wäßrigen Polymerdispersionen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten. Das Einmischen dieser Füllstoffe kann auch durch Induktionserwärmung erfolgen, was die Aushärtung erleichtert.

Darüber hinaus kann es sich empfehlen, für eine schnellere Vernetzung bei tieferen Temperaturen noch bestimmte Epoxidverbindungen hinzuzufügen beispielsweise di-oder trifunktionelle Glycidylether wie Bisphenol-A-diglycidylether oder Butandioldiglycidylether, also vor allem aromatische und aliphatische Glycidylether. Weiter geeignete Epoxidverbindungen sind cycloaliphatische Glycidylverbindungen, heterocyclische Glycidylverbindungen und cycloaliphatische Epoxidharze.

Schließlich können die wäßrigen Polymerdispersionen übliche Brandschutzmittel, wie z. B. Aluminiumsilikate, Aluminiumhydroxide, Borate und/oder Phosphate enthalten.

Häufig enthalten die wäßrigen Polymerdispersionen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die wäßrigen Polymerdispersionen können auch in Abmischung mit anderen Bindemitteln, wie beispielsweise Harnstoff-Formaldehyd-Harzen, Melamin-Formaldehyd-Harzen oder Phenol-Formaldehyd-Harzen, sowie mit Epoxidharzen eingesetzt werden.

Die wäßrigen Polymerdispersionen sind formaldehydfrei. Formaldehydfrei bedeutet, dass die erfindungsgemäßen Zusammensetzungen keine wesentlichen Mengen an Formaldehyd enthalten und auch bei Trocknung und/oder Härtung keine wesentlichen Mengen an Formaldehyd freigesetzt werden. Im Allgemeinen enthalten die Zusammensetzungen < 100 ppm Formaldehyd.

Die formaldehydfreien, wäßrigen Polymerdispersionen sind vor der Anwendung im Wesentlichen unvernetzt und daher thermoplastisch. Wenn erforderlich, kann jedoch ein geringer Grad an Vorvernetzung des Polymerisats A1 eingestellt werden, z. B. durch Verwendung von Monomeren mit zwei oder mehr polymerisierbaren Gruppen.

Die erfindungsgemäß einzusetzenden, wäßrigen Dispersionen bestehen im Wesentlichen aus feinteiligen Emulsionspolymerisatteilchen von A1 und einer wässrigen Phase, enthaltend das Polymerisat A2 sowie gegebenenfalls separat zugesetztes oder bei der Veresterung nicht umgesetztes Amin, sowie gegebenenfalls weitere wasserlösliche Additive, z.B. Vernetzer.

Dabei kann es in der wässrige Phase zur Ausbildung von Überstrukturen kommen, wie z. B. von durch lamellare oder kugelförmige Aggregate gebildeten lyotropen Phasen.

Die Monomerzusammensetzung wird erfindungsgemäß so gewählt, dass für das Polymerisat A1 eine Glasübergangstemperatur Tg im Bereich von -20°C bis +35°C, insbesondere von -20 bis +30°C, bevorzugt von -20 bis +25°C resultiert. Die Glasübergangstemperatur Tg der Polymerisate kann in bekannter Weise z. B. mittels Differential Scanning Calorimetry (DSC) ermittelt werden. Die Tg kann auch mittels der Fox-Gleichung näherungsweise berechnet werden. Nach Fox T. G., Bull. Am. Physics Soc. 1,3, Seite 123 (1956) gilt: $1/Tg = x_1/Tg_1 + x_2/Tg_2 + ... + x_n/Tg_n$, wobei $x_n$ für den Massebruch (Gew.-%/100) des Monomers n steht, und Tgn die Glasübergangstemperatur in Kelvin des Homopolymers des Monomeren n ist. Tg-Werte für Homopolymerisate sind in Polymer Handbook 3rd Edition, J. Wiley & Sons, New York (1989) aufgeführt.

Dabei empfiehlt es sich, als Polymerisate A1 Copolymerisate auf der Basis eines harten Comonomeren, wie zum Beispiel Styrol oder aber Methylmethacrylat, Acrylnitril, mit einer Glasübergangstemperatur von 65 bis 165°C und

eines weichen Comonomeren, wie zum Beispiel n-Butylacrylat oder aber 2-Ethylhexylacrylat, Ethylacrylat, mit einer Glasübergangstemperatur von -65 bis -10°C einzusetzen. Insbesondere bevorzugt werden Styrol und n-Butylacrylat eingesetzt. Es muß in diesem Fall dafür Sorge getragen werden, dass dann das entstehende Copolymerisat eine Glasübergangstemperatur von -20 bis +35°C aufweist. Eine höhere oder eine niedrigere Glasübergangstemperatur außerhalb des erfindungsgemäß für das Polymerisat A1 einzustellenden Temperaturbereichs führt dagegen zu minderen mechanischen Eigenschaften.

Die erfindungsgemäß einzusetzenden, wäßrigen Polymerdispersionen stellen feinteilige, stabile Latices dar. Die gewichtsmittlere Teilchengröße der Latexpartikel beträgt etwa 10 bis 1 500 nm, bevorzugt 20 bis 1 000 nm, besonders bevorzugt 30 bis 500 nm, gemessen mit Hilfe der analytischen Ultrazentrifuge (AUZ).

Die erfindungsgemäß einzusetzenden, wäßrigen Polymerdispersionen können mit Wasser oder verdünnten Salz- bzw. Tensid-Lösungen unbegrenzt verdünnt werden, ohne dass es zu einem Koagulieren der Latex-Partikel kommt. Sie haben einen Gehalt an nicht flüchtigen Anteilen (Feststoffgehalt) im Bereich von etwa 20 bis 75 Gew.-%, bevorzugt 25 bis 65 Gew.-%. Die Viskosität (bei einem Feststoffgehalt von 40 Gew.-%) liegt im Allgemeinen in einem Bereich von etwa 10 bis 4 000 mPas, gemessen mit einem Rotationsviskosimeter gemäß DIN 53019 bei 23°C und einer Schergeschwindigkeit von 250 $s^{-1}$.

Die erfindungsgemäß zu verwendenden wässrigen Polymerdispersionen können auch nach vorheriger Verdünnung mit Wasser den Schleifmaterialien zugesetzt werden. Ferner kann es vorteilhaft sein, die wässrigen Polymerdispersionen in Abmischung mit wasserverträglichen Lösungsmitteln wie zum Beispiel Alkoholen, insbesondere Methanol, Ethanol oder dergleichen zu applizieren. Die wässrigen Polymerdispersionen weisen im Allgemeinen eine gute Verträglichkeit gegenüber diesen Lösungsmitteln auf.

Die beschriebenen wässrigen Polymerdispersionen werden erfindungsgemäß als Bindemittel bei der Herstellung von Schleifmaterialien, insbesondere von Schleifpapieren, Schleifgeweben oder Schleifkörpern, verwendet. Dabei kann es sich empfehlen, die wässrigen Polymerdispersionen vor dem Auftragen auf das entsprechende Papier oder Gewebe oder den entsprechenden Körper durch Zugabe von verschiedenen anorganischen oder organischen Basen auf einen pH-Wert von 3 bis 8, insbesondere von 3 bis 5 einzustellen. Geeignete Basen sind u.a. Ammoniak, organische mono- oder polyfunktionelle Amine, Alkoholate sowie Metallalkylverbindungen, aber auch anorganische Basen wie zum Beispiel Natronlauge oder Soda.

Die auf diese Weise erhältlichen ebenfalls erfindungsgemäßen Schleifmaterialien weisen übliche Schleifgranulate auf, beispielsweise auf Basis von Korund, Quarz, Granat, Bimsstein, Tripel, Siliciumcarbid, Schmirgel, Aluminiumoxide, Zirkonoxide, Kieselgur, Sand, Gips, Borcarbid, Boride, Carbide, Nitride, Ceriumoxid oder Silikate.

Die erfindungsgemäßen Schleifmaterialien können u.a. dadurch hergestellt werden, dass man zunächst auf das entsprechende Papier, Gewebe oder den entsprechenden Körper die beschriebenen wässrigen Polymerdispersionen aufbringt, danach die gewählten Schleifgranulate hinzufügt und schließlich noch weitere Mengen der beschriebenen wässrigen Polymerdispersionen als sogenannten Deckbinder hinzufügt.

Die erfindungsgemäße Verwendung der wässrigen Polymerdispersion führt zu verbesserten Schleifmaterialien, die sich u.a. durch eine hohe Flexibilität, Zähelastizität, Reißkraft und Reißdehnung auszeichnen, über ein günstiges Abriebverhalten verfügen und in welchen das Schleifgranulat gut eingebunden ist.

Weiterhin können die erfindungsgemäßen Polymerdispersionen als Scheuervliese verwendet werden. Unter Scheuervliesen versteht man z.B. Scheuer-, Schleif- und Poliervliese, z.B. Topfreiniger oder Scotch Brite. Sie werden bevorzugt mit Phenol- oder Melamin-Formaldehydharzen verfestigt. Die wichtigsten Qualitätskriterien sind der harte Griff, die Kochwasserbeständigkeit (Vlies darf nicht weich werden) und die Schleifkorneinbindung bei Gebrauch. Die Umweltbelastung und mangelnde Arbeitsplatzhygiene bei Verwendung von Phenol- bzw. Melaminharzen ist problematisch.

Mit den beanspruchten Bindemitteln werden sehr gute Ergebnisse in Bezug auf die Wärmestandfestigkeit in heißem Wasser, sowie einer ausgezeichneten Schleifkorneinbindung erzielt. Weiterhin ist es möglich zusätzliche Dispersionen zuzumischen.

Eine (Sprüh)-Verfestigung eines Rohvlies bringt die folgenden Vorteile:

- Formaldehydfreiheit
- keine nennenswerte Geruchsbelästigung während der Produktion (beim Sprühen/im Trockner/Trocknerausgang)
- höhere Wärmestandfestigkeit im warmen Wasser (geringere Thermoplastizität)
- phenolharzähnlicher Charakter (ausgezeichneter Scheuereffekt nass und trocken)
- geruchsfreier Sprühcompound (kein Ammoniak zur Stabilisierung notwendig!)

Beispiele

I. Herstellung der zu verwendenden Polymerdispersion

Beispiel 0 (Herstellung des carboxylgruppenhaltigen Polymerisats A2)

In einem Druckreaktor mit Ankerrührer wurden 0,55 kg vollentsalztes Wasser, 0,36 kg Maleinsäureanhydrid sowie 0,91 kg einer 40 gew.-%igen wässrigen Lösung eines ethoxylierten Oleylamins (mittlerer Ethoxylierungsgrad = 12, z.B. Lutensol® FA Marken der Fa. BASF AG) vorgelegt. Unter Stickstoffatmosphäre wurde auf 125°C erwärmt. Nach Erreichen dieser Temperatur wurde innerhalb von 4 h Zulauf 1, bestehend aus 0,75 kg vollentsalztem Wasser und 1,00 kg Acrylsäure sowie innerhalb von 5 h Zulauf 2, bestehend aus 0,22 kg vollentsalztes Wasser und 0,12 kg $H_2O_2$ (30 gew.-%ig) gleichmäßig zudosiert. Nach Ende von Zulauf 1 wurden weitere 0,11 kg vollentsalztes Wasser zugegeben und auf Raumtemperatur abgekühlt. Die so erhaltene wässrige Polymerisat-Lösung hat einen Feststoffgehalt von 43,0 %, einen pH-Wert von 1,7 und eine Viskosität von 450 mPas. Der K-Wert beträgt 13,3.

Die nichtflüchtigen Anteile (FG) wurden in einem Umluft-Trockenschrank bestimmt aus dem Gewichtsverlust einer 1 g Probe, die zwei Stunden lang bei 120°C getrocknet wurde.

Die Viskosität der Mischungen/Emulsionen wurde in einem Brookfield-Viskosimeter bei einer Schergeschwindigkeit von 250 $s^{-1}$ gemäß DIN 53019 bei 23°C bestimmt.

Der pH-Wert wurde mit einer handylab 1 pH-Meter der Fa. Schott bestimmt.

Der K-Wert des Polymers A2 wurde nach Fikentscher (DIN 53726) bestimmt.

Beispiel 1 (Herstellung der Polymerdispersion aus dem Polymerisat A1 und dem Polymerisat A2)

In einem 4 l Glasgefäß mit Ankerrührer (120 Upm) wurden 750 g Wasser und 10 Gew.-% eines Zulaufs 4 vorgelegt und auf 90°C erhitzt. Nach 2 min wurden bei dieser Temperatur ein Zulauf 3 innerhalb von 3 h und die Restmenge von Zulauf 4 innerhalb von 3,5 h räumlich getrennt zudosiert. Anschließend wurde noch 30 min bei dieser Temperatur gerührt und das Reaktionsgemisch abgekühlt. Die so hergestellte Polymer-Dispersion enthält 49,2 Gew.-% nichtflüchtige Anteile und hat einen pH-Wert von 1,8. Die Viskosität der erhaltenen Polymer-Dispersion beträgt 1080 mPas (250 $s^{-1}$), die Glasübergangstemperatur des Polymeren liegt bei 14°C.

Anschließend wurden 357 g einer wässrigen Lösung (50 Gew.-%) von 2,2',2''-Nitrilo-triethanol zugegeben (siehe Vergleichsbeispiel A). Der pH-Wert der Mischung beträgt 3,5.

Zulauf 3

| | |
|---|---|
| 2326 g | des carboxylgruppenhaltigen Polymerisats A2 aus Beispiel 0 (43 gew.-%ig) |
| 500 g | Styrol |
| 450 g | n-Butylacrylat |
| 50 g | 2-Hydroxyethylacrylat |

Zulauf 4

| | |
|---|---|
| 60 g | vollentsalztes Wasser |
| 3,0 g | Natriumperoxodisulfat |

Vergleichsbeispiel A

In einem 4 l Glasgefä**ß** mit Ankerrührer (12 Upm) wurden 478 g Wasser und 10 Gew.-% eines Zulaufs 4 vorgelegt und auf 90°C erhitzt. Nach 2 min wurden bei dieser Temperatur ein Zulauf 3 innerhalb von 3 h und die Restmenge von Zulauf 4 innerhalb von 3,5 h räumlich getrennt zudosiert. Anschließend wurde noch 30 min bei dieser Temperatur nachpolymerisiert und das Reaktionsgemisch abgekühlt. Die so hergestellte Polymer-Dispersion enthielt 50,9 Gew.-% nichtflüchtige Anteile und hat einen pH-Wert von 2,0. Die Viskosität der erhaltenen Polymer-Dispersion beträgt 2060 mPas (250 $s^{-1}$), die Glasübergangstemperatur des Polymers liegt bei -43°C. Anschließend wurden 322 g

einer wässrigen Lösung (50 Gew.-%) von 2,2',2''-Nitrilo-triethanol zugegeben. Der pH-Wert der Mischung beträgt 3,5.

Zulauf 3

| | |
|---|---|
| 2098 g | des Säurepolymers aus Beispiel 0 (43 gew.-%ig) |
| 855 g | n-Butylacrylat |
| 45 g | 2-Hydroxyethylacrylat |

Zulauf 4

| | |
|---|---|
| 60 g | vollentsalztes Wasser |
| 2,7 g | Natriumperoxodisulfat |

Die Vergleichsbeispiele B bis E wurden analog zum Beispiel 1 mit den angegebenen Polymer/Monomerkombinationen hergestellt, d.h. es wurde in Anwesenheit des carboxylgruppenhaltigen Polymerisats A2 von Beispiel 0 das jeweils in Tabelle 1 angegebene Copolymerisat (Polymerisat A1) hergestellt.

Tabelle 1

| | Copolymerisat (Polymerisat A1 ) | Tg (calc.) [˚C] | FG [%] | Viskosität [mPas, 250 $s^{-1}$] | PH |
|---|---|---|---|---|---|
| Vergleichsbeispiel A | (95BA/ 5HEA) | -43 | 50,9 | 2060 | 3,5 |
| Vergleichsbeispiel B | (80EHA/20MMA) | -50 | 48,5 | 1110 | 3,4 |
| Vergleichsbeispiel C | (80BA/20AN) | -23 | 49,2 | 1120 | 3,5 |
| Vergleichsbeispiel D | (60BA/30EA/10S) | -24 | 49,1 | 1110 | 3,3 |
| Vergleichsbeispiel E | (72S/26MMA/2MAS) | 107 | 49,3 | 755 | 3,4 |
| Beispiel 1 | (50S/45BA/5HEA) | 14 | 49,2 | 1080 | 3,5 |

Abkürzungen:

| | |
|---|---|
| S: Styrol | BA: n-Butylacrylat |
| HEA: Hydroxyethylacrylat | EHA: Ethylhexylacrylat |
| AN: Acrylnitril | MAS: Methacrylsäure |
| Tg (calc.): errechnete Glasübergangstemperatur | FG: Feststoffgehalt |
| pH: pH-Wert | MMA: Methylmethacrylat |
| | EA: Ethylacrylat |

II. Herstellung eines Schleifpapiers und Messergebnisse

Mit den im erfindunggemäßen Beispiel 1 sowie den Vergleichsbeispielen A bis E erhaltenen Polymerdispersionen wurden Schleifpapiere nach folgendem Aufbau hergestellt.

Grundbinder: 20 g/$m^2$ Bindemittelauftrag, Trocknung 10 min bei 90˚C
Korn: Korund Kornstärke 60
Deckbinder: 60 g/$m^2$ Bindemittelauftrag, Trocknung 10 min bei 90˚C, 30 min bei 170˚C

In der nachfolgenden Tabelle 2 sind für das erfindungsgemäße Beispiel 1 sowie für die Vergleichsbeispiele A bis E die Reißfestigkeit (Reißkraft und Reißdehnung) und der Abrieb von Stahl wiedergegeben.

Tabelle 2

| | Reißkraft [N/mm2] | Reißdehnung [%] | Abrieb-Stahl [%] |
|---|---|---|---|
| Vergleichsbeispiel A | 35,2 | 12,0 | 0,5 |
| Vergleichsbeispiel B | 30,7 | 10,7 | 0,49 |
| Vergleichsbeispiel C | 43,0 | 13,0 | 0,49 |
| Vergleichsbeispiel D | 34,4 | 10,0 | 0,43 |
| Vergleichsbeispiel E | 26,5 | 10,0 | 0,32 |
| Beispiel 1 | 44,9 | 24,0 | 0,65 |

Die Bestimmung der Reißfestigkeit (Reißkraft und Reißdehnung) erfolgte nach DIN 53455 mit folgenden Einzelheiten:

| | |
|---|---|
| Geräte | Filmplatte aus Silikonkautschuk<br>Innenmaße 145 x 145 x 5 mm<br>Messingsieb, Maschenweite 0,16 mm<br>Plattenlagergestell, dass mittels einer Libelle waagrecht eingestellt werden kann. |
| Lagerung | Nach Trocknung in der Platte<br>Nr. 18.17.01 7 d bei NK (23˚C/50% rel. LF)<br>Nr. 18.17.02 7 d bei NK + 3 d Naßlagerung |
| Probenabmessungen | 5 Prüfhanteln mit einer Prüflänge von 40 mm und einer Prüfbreite von 4 mm (DIN 53455) |
| Prüfgeschwindigkeit | 200 mm/min |
| Prüftemperatur | NK = Normklima |
| Verfahrensweise | Die Filmplatte wird in das Plattenlagergestell eingeschoben. Bei einer 50%igen Dispersion werden ca. 35 g eingewogen, mit 25 g Wasser verdünnt und durch das Messingsieb blasenfrei in die Filmplatte gegossen und gleichmäßig verteilt. Die Dicke des Prüfkörpers wird mit einem Schichtdickemessgerät festgestellt. |
| Auswertung | Bruchdehnung in %<br>Maximalkraft in $N/mm^2$ |

Die Ermittlung des Abriebs von Stahl (Schleifmittel auf Unterlage erfolgte nach folgenden Bedingungen:

| | |
|---|---|
| Substrat | Schleifpapier, imprägniert |
| Probenabmessungen | ca. 50 x 250 mm |
| Anzahl der Prüfkörper | 3 |
| Geräte | Oberschalige Schnellwaage<br>Analysenwaage<br>Streichtisch<br>Abriebgerät APG 100/20 (Fa. Maag u. Schank Gomaringen) |
| Trocknung | Grundbinder 3 Min. 90˚C<br>Deckbinder 10 Min. 90˚C |
| Vernetzung | gemäß Angabe |

(fortgesetzt)

| | |
|---|---|
| Verfahrensweise | Die imprägnierte Seite des Gessnerpapiers wird auf dem Streichtisch mit dem Grundbinder beschichtet und in den nassen Film das Schleifkorn eingestreut, anschließend wird 3 Min. bei 90˚C getrocknet.<br>Auf die getrocknete Beschichtung wird der Deckbinder mit einer Gummiwalze oder im Spritzauftrag aufgebracht und 10 Min. bei 90˚C getrocknet. Das gesamte System wird anschließend 30 Min. bei 150˚C oder gemäß Vorgabe vernetzt.<br>Aus dem so entstandenen Schleifpapier werden die Probestreifen ausgeschnitten.<br>Zum Prüfen des Abriebs werden Prüfkörper aus PVC, Buchenholz, Stahl oder gemäß Angabe mit den Abmessungen 40 x 20 x 5 mm verwendet.<br>Es wird mit 500 Hüben und 1 kg Belastung die Fläche von 20 x 5 mm der Prüfkörper abgeschliffen, wobei das Schleifpapier unter dem Prüfkörper auf einer Länge von 10,5 cm hin- und herbewegt wird. Als Maß für die Qualität des Bindemittels dient der Abrieb an Prüfkörper und Papier. |
| Auswertung | $\frac{\text{Masse Prüfkörper vor Prüfung – Masse Prüfkörper nach Prüfung}}{\text{Masse Prüfkörper vor Prüfung}}$ **X100 in %** |

Herstellung eines Scheuervlieses und Messergebnisse

Trägermaterial: 22 dtx PA-Vlies; kreuzgelegt ca. 100 - 120 g/$m^2$

Zunächst wird das PA-Rohvlies mit dem Bindemittel (Festauftrag: max. 10 g/$m^2$ pro Seite) beidseitig vorbesprüht und bei 120˚C vorgetrocknet. Das Vlies erhält somit die nötige Stabilität für die nachfolgenden (Haupt)-Sprühpassagen. Danach wird je nach gewünschtem Scheuereffekt, bzw. Einsatzzweck in mehreren (2-3) Passagen (je Vliesseite) mit Zwischentrocknung (bei 120˚C) der angestrebte Gesamtauftrag aufgesprüht.

Um die optimale Schleifkorneinbindung, bzw. Scheuerfestigkeit zu erhalten, muß nachdem der Endauftrag erreicht ist, bei 180 - 200˚C ca. 3 - 5 min. vernetzt werden.

| Additive/Zusätze: | Versuch 1 | Versuch 2 | Versuch 3 |
|---|---|---|---|
| | Vergleichsbeispiel | | |
| | [Gew.Tl.] | [Gew.Tl.] | (Gew.Tl.] |
| Wasser | 60 | 50 | 50 |
| Entschäumer Agitan 281 | 0,2 | 0,2 | 0,2 |
| Saduren® 163 (BASF AG) | 60 | - | - |
| Ammoniakwasser, 25 %ig | 2-3 | - | - |
| Beispiel 1 (50S/45 BA/5 HEA) | - | 100 | 80 |
| Acrylatdispersion (Copolymerisat 52.5 EA, 28 AN, 15 BA, 2,6 AM, 1.9 Amol, Tg = 39˚C) | 100 | - | 20 |
| Siliciumcarbid F180 | 75 | 75 | 75 |
| Siliciumcarbid F120 | 25 | 25 | 25 |
| Collacral® PU 85 (BASF AG) | 9 | 1 | 1 |
| Feststoffgehalt, Sprühcompound : ca.: | 59 - 60 % | 59 - 60 % | 59 - 60 % |
| pH-Wert: | 9,5-10 | 3,5 | 3,5 |
| VT02 Spindel 3: ca.: | 150 mPa*s | 180 mPa*s | 180 mPa*s |
| Vortrocknung je Sprühpassage: | 2min./120˚C | 2min./120˚C | 2min./120˚C |
| Vernetzung: | 5min./200˚C | 3min./200˚C | 3min./200˚C |
| Gesamtfestauftrag, ca.: | 320 % | 320 % | 320 % |
| Wärmestandfestigkeit in H20 (80˚C, 10 min): | Vergleich | besser als Vergleich | besser als Vergleich |

(fortgesetzt)

| Additive/Zusätze: | Versuch 1 | Versuch 2 | Versuch 3 |
|---|---|---|---|
| | Vergleichsbeispiel | | |
| | [Gew.Tl.] | [Gew.Tl.] | (Gew.Tl.] |
| Schleifkorneinbindung: | gut | gut | gut |

Auswaschverlust/Heißwasserbeständigkeit:

Bedingungen: Prüflinge 30 min. in 80˚C heißem Wasser mittels Magnetrührer im 2l-Becherglas bewegen, anschließend trocknen bei 120˚C und zurückwiegen. Angabe: Gewichtsverlust in %

| | |
|---|---|
| Versuch 1 | -1,6 % |
| Versuch 2 | +/- 0 % |
| Versuch 3 | +/- 0 % |

Abriebverhalten

Belastung: 20N, jeweils 5000 Touren, Zugabe von 2 ml Scheuermittel (2 Gew.-Teile Stahlfix und 1 Gew.-Teil Wasser), Bestimmung des Abriebs in %

Versuch 1 (Vergleichsbeispiel):

| | 5000 Touren | 10000 Touren | 15000 Touren |
|---|---|---|---|
| Blech | 0,034 | 0,042 | 0,059 |
| Vlies | 0,563 | 1,415 | 1,945 |

Versuch 2:

| | 5000 Touren | 10000 Touren | 15000 Touren |
|---|---|---|---|
| Blech | 0,021 | 0,038 | 0,042 |
| Vlies | 0,101 | 0,361 | 0,578 |

Versuch 3:

| | 5000 Touren | 10000 Touren | 15000 Touren |
|---|---|---|---|
| Blech | 0,021 | 0,034 | 0,042 |
| Vlies | 0,530 | 1,045 | 1,809 |

## Patentansprüche

**1.** Verwendung einer wäßrigen Polymerdispersion, enthaltend dispergierte Polymerteilchen mindestens eines Polymerisats A1, welches eine Glasübergangstemperatur Tg von -20˚C bis +35˚C aufweist und das erhältlich ist durch radikalische Emulsionspolymerisation in Gegenwart eines Polymerisats A2, das aufgebaut ist aus

- 50 bis 99,5 Gew.-% mindestens einer ethylenisch ungesättigten Mono- und/oder Dicarbonsäure, deren Carbonsäuregruppen eine Anhydridgruppe bilden können oder Gemischen davon,

- 0,5 bis 50 Gew.-% wenigstens einer ethylenisch ungesättigten Verbindung, die ausgewählt ist unter den Estern ethylenisch ungesättigter Monocarbonsäuren und den Halbestern und Diestern ethylenisch ungesättigter Dicarbonsäuren mit einem mindestens eine Hydroxylgruppe aufweisenden Amin,
- bis zu 20 Gew.-% mindestens eines weiteren Monomers

als Bindemittel für die Herstellung von Schleifmaterialien.

**2.** Verwendung einer wäßrigen Polymerdispersion nach Anspruch 1, wobei das Polymerisat A2 als ethylenisch ungesättigte Mono- und/oder Dicarbonsäure mindestens eine Verbindung enthält, die ausgewählt ist unter $C_3$-$C_{10}$-Monocarbonsäuren und $C_4$-$C_{8}$-Dicarbonsäuren.

**3.** Verwendung einer wässrigen Polymerdispersion nach einem der Ansprüche 1 oder 2, wobei das mindestens eine Hydroxylgruppe aufweisende Amin ausgewählt ist unter Aminen der allgemeinen Formel (I)

$$R^cNR^aR^b \qquad (I)$$

wobei

$R^c$ für $C_6$- bis $C_{22}$-Alkyl, $C_6$- bis $C_{22}$-Alkenyl, Aryl-$C_6$-$C_{22}$-alkyl oder Aryl-$C_6$-$C_{22}$-alkenyl steht, wobei der Alkenylrest 1,2 oder 3 nicht benachbarte Doppelbindungen aufweisen kann,
$R^a$ für Hydroxy-$C_1$-$C_6$-alkyl oder einen Rest der Formel II

$$-(CH_2CH_2O)_x(CH_2CH(CH_3)O)_y\text{-}H \qquad (II)$$

steht, wobei
in der Formel II die Reihenfolge der Alkylenoxideinheiten beliebig ist und x und y unabhängig voneinander für eine ganze Zahl von 0 bis 100 stehen, wobei die Summe aus x und y > 1 ist,
$R^b$ für Wasserstoff, $C_1$- bis $C_{22}$-Alkyl, Hydroxy-$C_1$-$C_6$-alkyl, $C_6$- bis $C_{22}$-Alkenyl, Aryl-$C_6$-$C_{22}$-alkyl, Aryl-$C_6$-$C_{22}$-alkenyl oder $C_5$- bis $C_8$-Cycloalkyl steht, wobei der Alkenylrest 1,2 oder 3 nicht benachbarte Doppelbindungen aufweisen kann,
oder Rb für einen Rest der Formel III

$$-(CH_2CH_2O)_v(CH_2CH(CH_3)O)_w\text{-}H \qquad (III)$$

steht, wobei
in der Formel III die Reihenfolge der Alkylenoxideinheiten beliebig ist und v und w unabhängig voneinander für eine ganze Zahl von 0 bis 100 stehen,

und Mischungen davon.

**4.** Verwendung einer wäßrigen Polymerdispersion nach einem der Ansprüche 1 bis 3, wobei das Gewichtsverhältnis auf Feststoffbasis von Polymerisat A1 zu Polymerisat A2 im Bereich von 7:1 bis 1:7, vorzugsweise 3:1 bis 1:3, liegt.

**5.** Verwendung einer wäßrigen Polymerdispersion nach einem der Ansprüche 1 bis 4, wobei noch ein Alkanolamin mit mindestens zwei Hydroxylgruppen als Vernetzer hinzugefügt wird.

**6.** Verwendung einer wässrigen Polymerdispersion nach einem der Ansprüche 1 bis 5, wobei das oder die Polymerisate $A_1$ eine Glasübergangstemperatur Tg von -20°C bis +30°C aufweisen.

**7.** Verwendung einer wässrigen Polymerdispersion nach einem der Ansprüche 1 bis 6, wobei als Polymerisate $A_1$ Copolymerisate auf Basis eines harten Comonomeren mit einer Glasübergangstemperatur von 65 bis 165°C und eines weichen Comonomeren mit einer Glasübergangstemperatur von -65 bis -10°C eingesetzt werden.

**8.** Verwendung einer wässrigen Polymerdispersion nach einem der Ansprüche 1 bis 7, wobei die wässrige Polymerdispersion nach ihrer Herstellung durch Zugabe von anorganischen oder organischen Basen auf einen pH-Wert von 2 bis 8 eingestellt wird.

**9.** Verwendung einer wässrigen Polymerdispersion nach einem der Ansprüche 1 bis 8, wobei die wässrige Polymerdispersion mit einer oder mehrerer organischer oder anorganischer, polymerer Mischungskomponenten in gelöster oder dispergierter Form gemischt wird.

**10.** Schleifmaterialien, enthaltend als Bindemittel eine wässrige Polymerdispersion gemäß den Ansprüchen 1 bis 9.

**11.** Schleifpapiere, enthaltend als Bindemittel eine wässrige Polymerdispersion gemäß den Ansprüchen 1 bis 9.

**12.** Schleifgewebe, enthaltend als Bindemittel eine wässrige Polymerdispersion gemäß den Ansprüchen 1 bis 9.

**13.** Scheuervliese enthaltend als Bindemittel eine wässrige Polymerdispersion gemäß den Ansprüchen 1 bis 9.

## Claims

**1.** The use of an aqueous polymer dispersion comprising dispersed particles of at least one polymer A1 having a glass transition temperature, Tg, of from -20°C to +35°C and obtainable through free-radical emulsion polymerization in the presence of a polymer A2 synthesized from

- from 50 to 99.5% by weight of at least one ethylenically unsaturated monocarboxylic and/or dicarboxylic acid whose carboxylic groups can form an anhydride group, or mixtures thereof,
- from 0.5 to 50% by weight of at least one ethylenically unsaturated compound selected from the esters of ethylenically unsaturated monocarboxylic acids and the monoesters and diesters of ethylenically unsaturated dicarboxylic acids with an amine containing at least one hydroxyl group, and
- up to 20% by weight of at least one further monomer

as binder for producing abrasive material.

**2.** The use of an aqueous polymer dispersion according to claim 1 wherein the polymer A2 comprises as ethylenically unsaturated monocarboxylic and/or dicarboxylic acid at least one compound selected from $C_3$-$C_{10}$ monocarboxylic acids and $C_4$-$C_8$ dicarboxylic acids.

**3.** The use of an aqueous polymer dispersion according to claim 1 or 2 wherein the amine containing at least one hydroxyl group is selected from amines of the formula (I)

$$R^cNR^aR^b \qquad (I)$$

where

$R^c$ is $C_6$ to $C_{22}$ alkyl, $C_6$ to $C_{22}$ alkenyl, aryl-$C_6$-$C_{22}$ alkyl or aryl-$C_6$-$C_{22}$ alkenyl, the alkenyl radical having 1 or 2 or 3 nonadjacent double bonds,
$R^a$ is hydroxy-$C_1$-$C_6$ alkyl or a radical of the formula II

$$-(CH_2CH_2O)_x(CH_2CH(CH_3)O)_y-H \qquad (II)$$

where
in the formula II the sequence of the alkylene oxide units is arbitrary and x and y independently of each other are an integer from 0 to 100, the sum of x and y being > 1,
$R^b$ is hydrogen, $C_1$ to $C_{22}$ alkyl, hydroxy-$C_1$-$C_6$ alkyl, $C_6$ to $C_{22}$ alkenyl, aryl-$C_6$-$C_{22}$ alkyl, aryl-$C_6$-$C_{22}$ alkenyl or $C_5$ to $C_8$ cycloalkyl, the alkenyl radical having 1 or 2 or 3 nonadjacent double bonds,
or Rb is a radical of the formula III

$$-(CH_2CH_2O)_v(CH_2CH(CH_3)O)_w-H \qquad (III)$$

where
in the formula III the sequence of the alkylene oxide units is arbitrary and v and w independently of each other are an integer from 0 to 100,

and mixtures thereof.

4. The use of an aqueous polymer dispersion according to any of claims 1 to 3 wherein the weight ratio based on solids of polymer A1 to polymer A2 is in the range from 7:1 to 1:7, preferably 3:1 to 1:3.

5. The use of an aqueous polymer dispersion according to any of claims 1 to 4 with the further addition as crosslinker of an alkanolamine having at least two hydroxyl groups.

6. The use of an aqueous polymer dispersion according to any of claims 1 to 5 wherein the polymer or polymers A1 have a glass transition temperature, Tg, of from -20˚C to +30˚C.

7. The use of an aqueous polymer dispersion according to any of claims 1 to 6 wherein said polymers $A_1$ are copolymers based on a hard comonomer having a glass transition temperature of from 65 to 165˚C and a soft comonomer having a glass transition temperature of from -65 to -10˚C.

8. The use of an aqueous polymer dispersion according to any of claims 1 to 7 which following its preparation is adjusted to a pH of from 2 to 8 by addition of organic or inorganic bases.

9. The use of an aqueous polymer dispersion according to any of claims 1 to 8 which is mixed with one or more organic or inorganic, polymeric mixing components in dissolved or dispersed form.

10. Abrasive material comprising as binder an aqueous polymer dispersion according to claims 1 to 9.

11. Abrasive paper comprising as binder an aqueous polymer dispersion according to claims 1 to 9.

12. Abrasive cloth comprising as binder an aqueous polymer dispersion according to claims 1 to 9.

13. A scouring pad comprising as binder an aqueous polymer dispersion according to claims 1 to 9.

## Revendications

1. Utilisation d'une dispersion aqueuse de polymères contenant des particules dispersées de polymères d'au moins un polymère A1 qui présente une température de transition vitreuse Tg de -20˚C à +35˚C et qui est obtenu par polymérisation en émulsion radicalaire en présence d'un polymère A2 qui est composé de :

- 50 à 99,5 % en poids d'au moins un acide mono- et/ou dicarboxylique éthyléniquement insaturé dont les groupes carboxyliques peuvent former un groupe anhydride ou des mélanges de ceux-ci;
- 0,5 à 50 % en poids d'au moins un composé éthyléniquement insaturé qui est sélectionné parmi les esters d'acides monocarboxyliques éthyléniquement insaturés et les semi-esters et diesters d'acides monocarboxyliques éthyléniquement insaturés avec une amine présentant au moins un groupe hydroxyle;
- jusqu'à 20 % en poids d'au moins un autre monomère

comme liant pour la préparation de matériel abrasif.

2. Utilisation d'une dispersion polymère aqueuse selon la revendication 1, dans laquelle le polymère A2 contient, comme acide mono- et/ou dicarboxylique éthyléniquement insaturé, au moins un composé qui est sélectionné parmi les acides $C_3$-$C_{10}$-monocarboxyliques et $C_4$-$C_8$-dicarboxyliques.

3. Utilisation d'une dispersion polymère aqueuse selon l'une des revendications 1 ou 2, dans laquelle au moins une amine présentant un groupe hydroxyle est sélectionnée parmi les amines de formule générale (I)

$$R^cNR^aR^b \qquad (I)$$

dans laquelle

$R^c$ désigne un radical $C_6$- à $C_{22}$-alkyle, $C_6$- à $C_{22}$-alcényle, aryl-$C_6$-$C_{22}$-alkyle ou aryl-$C_6$-$C_{22}$-alcényle, le reste alcényle pouvant présenter 1, 2 ou 3 doubles liaisons non voisines,
$R^a$ désigne un radical hydroxy-$C_1$-$C_6$-alkyle ou un reste de formule II

$$- (CH_2CH_2O)_x(CH_2CH(CH_3)O)_y\text{-}H \qquad (II)$$

dans laquelle
l'ordre des unités alkylèneoxyde est quelconque dans la formule II et x et y désignent, indépendamment l'un de l'autre, un nombre entier de 0 à 100, la somme de x et y étant > 1,
$R^b$ désigne l'hydrogène, un radical $C_1$- à $C_{22}$-alkyle, hydroxy-$C_1$-$C_6$-alkyle, $C_6$- à $C_{22}$-alcényle, aryl-$C_6$-$C_{22}$-alkyle, aryl-$C_6$-$C_{22}$-alcényle ou $C_5$- à $C_8$-cycloalkyle, le reste alcényle pouvant présenter 1, 2 ou 3 doubles liaisons non voisines
ou $R^b$ désigne un reste de formule III

$$-(CH_2CH_2O)_v(CH_2CH(CH_3)O)_w\text{-}H \qquad (III)$$

dans laquelle l'ordre des unités alkylèneoxyde est quelconque dans la formule III et v et w désignent, indépendamment l'un de l'autre, un nombre entier de 0 à 100,

et des mélanges de ceux-ci.

**4.** Utilisation d'une dispersion polymère aqueuse selon l'une des revendications 1 à 3, dans laquelle le rapport pondéral sur base des matières solides du polymère A1 au polymère A2 est de l'ordre de 7:1 à 1:7, de préférence de 3:1 à 1:3.

**5.** Utilisation d'une dispersion polymère aqueuse selon l'une des revendications 1 à 4, dans laquelle encore une alcanolamine avec au moins deux groupes hydroxyle est ajoutée comme réticulant.

**6.** Utilisation d'une dispersion polymère aqueuse selon l'une des revendications 1 à 5, dans laquelle le ou les polymères A1 présentent une température de transition vitreuse Tg de -20°C à +30°C.

**7.** Utilisation d'une dispersion polymère aqueuse selon l'une des revendications 1 à 6, dans laquelle les polymères A1 utilisés sont des copolymères à base d'un comonomère dur avec une température de transition vitreuse de 65 à 165°C et d'un comonomère souple avec une température de transition vitreuse de -65 à -10°C.

**8.** Utilisation d'une dispersion polymère aqueuse selon l'une des revendications 1 à 7, dans laquelle la dispersion polymère aqueuse est réglée après sa préparation à un pH de 2 à 8 par adjonction de bases organiques ou inorganiques.

**9.** Utilisation d'une dispersion polymère aqueuse selon l'une des revendications 1 à 8, dans laquelle la dispersion polymère aqueuse est mélangée avec un ou plusieurs composants de mélange polymères organiques ou inorganiques sous forme diluée ou dispersée.

**10.** Matériel abrasif contenant comme liant une dispersion polymère aqueuse selon les revendications 1 à 9.

**11.** Papiers abrasifs contenant comme liant une dispersion polymère aqueuse selon les revendications 1 à 9.

**12.** Tissu abrasif contenant comme liant une dispersion polymère aqueuse selon les revendications 1 à 9.

**13.** Toiles à récurer contenant comme liant une dispersion polymère aqueuse selon les revendications 1 à 9.